## Europäisches Patentamt
## European Patent Office
## Office européen des brevets

(11) Veröffentlichungsnummer: **0 022 806**
**B1**

(12) **EUROPÄISCHE PATENTSCHRIFT**

(45) Veröffentlichungstag der Patentschrift:
27.07.83

(51) Int. Cl.³: **G 02 B 7/02, G 02 B 21/02**

(21) Anmeldenummer: **80900127.4**

(22) Anmeldetag: **12.01.80**

(86) Internationale Anmeldenummer:
**PCT/DE 80/00004**

(87) Internationale Veröffentlichungsnummer:
**WO 80/01512 (24.07.80 Gazette 80/17)**

(54) **MIKROSKOPOBJECTIVFASSUNG.**

(30) Priorität: **19.01.79 DE 7901401 U**

(43) Veröffentlichungstag der Anmeldung:
**28.01.81 Patentblatt 81/4**

(45) Bekanntmachung des Hinweises auf die Patenterteilung:
**27.07.83 Patentblatt 83/30**

(84) Benannte Vertragsstaaten:
**AT CH FR GB**

(56) Entgegenhaltungen:
**DE-A-2 554 749**
**DE-U-1 993 231**
**GB-A-917 193**
**Feinmechanische Bauelemente, Carl Hauser Verlag München Wien, 1978, S. 592**

(73) Patentinhaber: **ERNST LEITZ WETZLAR GMBH,**
**Ernst-Leitz-Strasse 30 Postfach 20 20,**
**D-6330 Wetzlar 1 (DE)**

(72) Erfinder: **LISFELD, Robert, Kirchbodenstrasse 7,**
**D-6331 Greifenstein-Ulm (DE)**
Erfinder: **BENDER, Reinhold, Jahn-Strasse 26,**
**D-6336 Solms (DE)**

## Mikroskopobjektivfassung

Die Erfindung betrifft eine Mikroskopobjektivfassung zum Anschrauben an ein Mikroskop mit einer um die Fassung drehbaren Hülse, die an der Fassung mittels einer in eine Ringnut der Fassung eingreifenden Rastverbindung gehalten wird.

Es ist bekannt, Fassungen von Mikroskopobjektiven mit einer drehbaren Hülse zu umgeben, die Angaben beispielsweise über die mechanische Tubuslänge, die optimale Deckglasdicke, den Abbildungsmaßstab und die numerische Apertur trägt. Damit ist es möglich, diese Beschriftung bei eingeschraubtem Objektiv jederzeit in das Gesichtsfeld des Benutzers zu drehen, was insbesondere bei Objektivrevolvern vorteilhaft ist.

Bei der in dem DE-U-1 993 231 beschriebenen Anordnung weisen dazu Fassung und Hülse Ringnuten auf, in die ein Sprengring eingreift, der die Hülse hält, oder die Hülse wird mittels einer aufgeschraubten Kappe gehalten. Das Objektiv kann hierbei jederzeit mitsamt der aufgesetzten Hülse an- bzw. abgeschraubt werden.

Eine andere Lösung, um die beschriftete Hülse drehbar auf der Objektivfassung zu befestigen, besteht nach der DE-A-2 554 749 darin, einen elastisch verformbaren Ring zwischen Hülse und Fassung vorzusehen, wobei Hülse und Ring mit Erhebungen und Aussparungen und die Fassung mit einer Ringnut versehen ist. Beim Aufschieben der Hülse erfolgt über den gesamten Umfang des Ringes eine kraftschlüssige Verbindung zwischen der Fassung und dem Ring; gleichzeitig ist eine leichte Drehbarkeit der Hülse gewährleistet, so daß ein ungewolltes Lösen des Mikroskopobjektivs durch bloßes Drehen an der Hülse nicht eintritt. Dreht man jedoch an dem dafür vorgesehenen Anschraubrändel des Objektivs, so ist auch bei dieser Anordnung ein Entfernen des Objektivs zusammen mit der aufgesetzten Hülse ohne besondere Hilfsmittel möglich. Dieses stellt insbesondere bei Kursmikroskopen eine gewisse Gefahr dar, indem die Objektive von Anfängern häufig unsachgemäß ein- und ausgeschraubt oder sogar widerrechtlich entfernt werden können.

Dementsprechend lag der Erfindung die Aufgabe zugrunde, eine Mikroskopobjektivfassung der eingangs genannten Art so auszubilden, daß ein Entfernen des Mikroskopobjektivs, beispielsweise durch Unbefugte, trotz Drehbarkeit der Hülse ohne besondere Hilfsmittel nicht möglich ist. Das befugte Lösen des Objektivs sollte dabei aber unter Benutzung einfachster Hilfsmittel leicht möglich sein.

Diese Aufgabe wird erfindungsgemäß dadurch gelöst, daß sich die Hülse bei an das Mikroskop angeschraubter Fassung annähernd über die gesamte Länge der Fassung erstreckt und die Hülse eine Bohrung aufweist, durch die hindurch die Rastverbindung mit Hilfe eines Stiftes betätigbar ist. Auf diese Weise bleibt die Drehbarkeit der Hülse zum Sichtbarmachen der darauf befindlichen Daten erhalten. Gleichzeitig wird jedoch sichergestellt, daß die Fassung nicht ergriffen und das Objektiv herausgeschraubt werden kann, da die Fassung praktisch vollständig von der drehbaren Hülse umgeben ist und die Rastverbindung sich mit derselben um die Fassung dreht. Zum Lösen der Hülse von der Fassung bedarf es vielmehr eines Werkzeuges zum Entsperren der Rastverbindung. Ein An- oder Abschrauben des Objektivs mit aufgesetzter Hülse ist nicht möglich.

Als Rastverbindung dient zweckmäßig eine gebogene, radial verformbare Blattfeder mit einem auf derselben angeformten Vorsprung sowie die diesen aufnehmende Bohrung in der Hülse, wobei die Blattfeder in der Ringnut der Fassung zusammen mit der Hülse drehbar ist. Weiterer Bauteile bedarf es hierbei nicht. Es versteht sich jedoch, daß auch andere Rastverbindungen wie gefederte Kugeln, Gewindehülsen oder dergleichen Verwendung finden können. Schließlich ist es besonders günstig, wenn die Rastverbindung in Nähe des Anschraubgewindes zum Anschrauben des Objektivs angeordnet ist. Dadurch wird die einzige, von außen erkennbare Stelle der Rastverbindung, nämlich die Bohrung in der Hülse mit dem eingerasteten Vorsprung der Blattfeder, vom Objektivtubus oder -revolver praktisch verdeckt.

In der Zeichnung sind im Schnitt schematisch zwei Ausführungsbeispiele von Mikroskopobjektivfassungen gemäß der Erfindung dargestellt und werden nachfolgend näher erläutert.

Die Mikroskopobjektivfassung 10 ist an ihrem oberen Ende mit einem Anschraubgewinde 11 zum Anschrauben an einen nicht dargestellten Objektivtubus oder -revolver versehen. Dicht unterhalb des Anschraubgewindes 11 verläuft eine Ringnut 12, die von einem oberen Flansch 13 und einem unteren Flansch 14 begrenzt wird, die an der Fassung 10 angeformt sind und sich radial erstrecken. Die Ringnut 12 zwischen den Flanschen 13, 14 ist wegen der meist geringen Wandstärken der Mikroskopobjektivfassungen nur so tief ausgebildet, daß sie eine gebogene Blattfeder 15 zumindest teilweise aufnehmen kann, die sich an den Flanschen 13, 14 in axialer Richtung abstützt. Die Krümmung der Blattfeder 15 ist dabei so gewählt, daß diese im Ruhezustand nur im Bereich ihrer beiden Enden auf der zylindrischen Fläche der Ringnut 12 aufliegt und von den Flanschen 13, 14 überragt wird, während ihr mittlerer Abschnitt geringfügig über dieselben hervorsteht. Auf diese Weise ergibt sich eine radiale, elastische Verformbarkeit der Blattfeder 15 in der durch einen Pfeil 16 bezeichneten Richtung. Auf der der Ringnut 12 abgewandten Seite der Blattfeder 15 ist etwa in deren Mitte ein Vorsprung 17 angeformt.

Die Fassung 10 ist annähernd über ihre gesamte Länge von einer im wesentlichen zylindrischen Hülse 18 umgeben, die mit ihrer Innenfläche drehbar auf der Oberfläche der Fassung 10 aufliegt. An dem Ende, das zuerst auf die Fassung 10 geschoben wird, weist die Hülse 18 eine kragenförmige Erweiterung 19 auf, um das Aufschieben zu erleichtern. In der Nähe des oberen Randes der Erweiterung 19 ist eine Bohrung 20 in der Hülse 18 vorgesehen, deren Durchmesser geringfügig größer als der des Vorsprungs 17 auf der Blattfeder 15 ist und diesen aufnimmt.

Damit ergibt sich folgende Funktionsweise der Anordnung: Zum Ansetzen des Mikroskopobjektivs an einen Objektivtubus oder -revolver wird die Fassung 10 mit ihrem Anschraubgewinde 11 in das hier nicht gezeigte Gegengewinde eingeschraubt. Zweckmäßig wurde zuvor die Blattfeder 15 in die Ringnut 12 der Fassung 10 eingelegt, in der sie von den Flanschen 13, 14 gehalten wird. Es ist jedoch auch möglich, die Blattfeder 15 erst nach dem Einschrauben der Fassung 10 in die Ringnut 12 einzusetzen. Über die eingeschraubte Fassung 10 wird sodann die Hülse 18 geschoben, wobei deren Bohrung 20 etwa mit dem Vorsprung 17 auf der Blattfeder 15 ausgerichtet wird. Der Einschubweg der Hülse 18 wurde zunächst durch die mit ihrem mittleren, den Vorsprung 17 tragenden Teil über die Flansche 13, 14 hervorstehende Blattfeder 15 begrenzt, an welche die Erweiterung 19 der Hülse 18 zum Anschlag kommt. Durch leichtes Andrücken der Blattfeder 15 wird diese radial nach innen verformt und liegt bündig an der Ringnut 12 an. Die Hülse 18 wird nunmehr mit ihrer Erweiterung 19 über die Blattfeder 15 geschoben, wobei in dem Moment, in dem die Bohrung 20 der Hülse 18 über den Vorsprung 17 der Blattfeder 15 gleitet, diese unter Entspannung mit ihrem Vorsprung 17 in die Bohrung 20 eingreift und so die axiale Rastverbindung zwischen Hülse 18 und Fassung 10 herstellt. Beim Drehen der Hülse 18 um die feststehende Fassung 10 wird die Blattfeder 15 in gleicher Weise in der Ringnut 12 mitgeführt, wobei die Hülse 18 durch den in ihre Bohrung 20 eingreifenden Vorsprung 17 gehalten und gegen radiale und axiale Verschiebung gesichert wird.

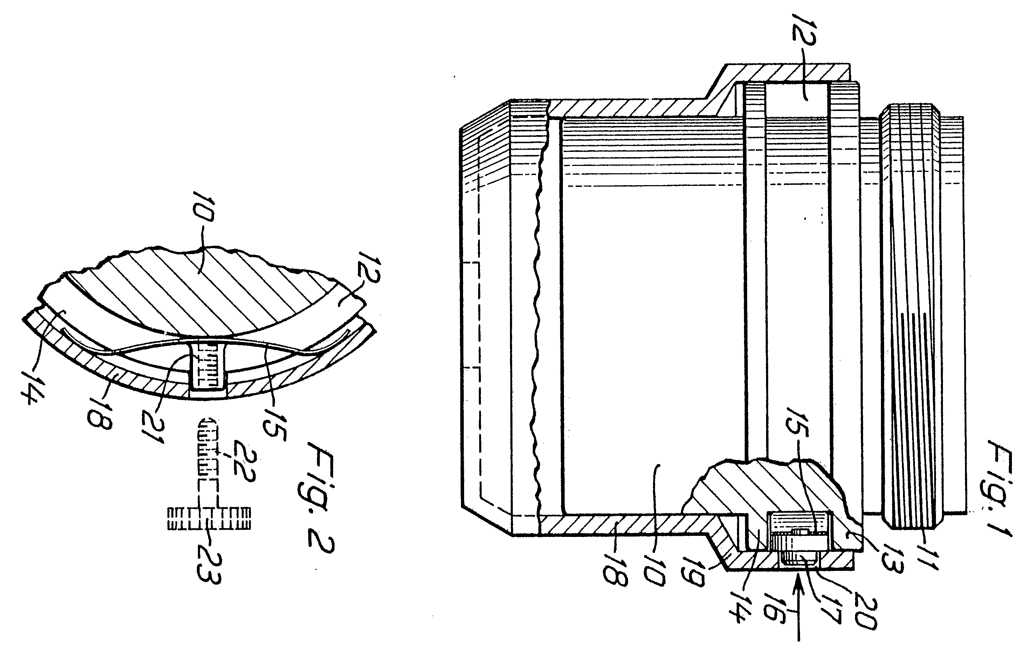

Im Ausführungsbeispiel von Fig. 2 ist die Blattfeder 15 in bezug auf die optische Achse des Objektivs konvex gebogen. Dabei greift sie mit ihrem mittleren Bereich gleichfalls in die Ringnut 12 der Fassung 10 ein, mit dem sie am Grund der Ringnut 12 anliegt. Im mittleren Bereich der Blattfeder 15 ist eine Gewindehülse 21 angeformt, in der ein hier gestrichelt gezeichneter Gewindestift 22 mit einem Rändel 23 einschraubbar ist.

Da sich die Hülse 18 nahezu über die gesamte Länge der Fassung 10 erstreckt, ergibt sich kein Ansatz zum Ergreifen und Herausschrauben derselben. Besonders vorteilhaft ist dabei außerdem, daß eine Oberflächenbehandlung der Fassung entfallen kann.

Zum Entfernen des Objektivs ist ein Lösen der Rastverbindung erforderlich. Dieses erfolgt im ersten Fall in einfacher Weise dadurch, daß mittels eines spitzen Gegenstandes auf den Vorsprung 17 der Blattfeder 15 gedrückt wird. Diese schiebt sich dabei in die Ringnut 12 zurück und entsperrt die Rastverbindung, so daß die Hülse 18 von der Fassung 10 gezogen und diese abgeschraubt werden kann.

Im zweiten Fall wird zum Lösen der Rastverbindung der Gewindestift 22 in die Gewindehülse 21 eingeschraubt und in radialer Richtung leicht angezogen, was durch das Rändel 23 erleichtert wird. Dabei wird die Blattfeder 15 in ihrem mittleren Bereich vom Grund der Ringnut 12 abgehoben, so daß die Hülse 18 über den unteren Flansch 14 der Ringnut 12 abgezogen werden kann. Bei dieser Ausführungsform ist das Entfernen der Hülse 18 von der Fassung 10 und damit das Lösen des Objektivs vom Objektivtubus oder -revolver besonders schwierig.

**Patentansprüche**

1. Mikroskopobjektivfassung zum Anschrauben an ein Mikroskop mit einer um die Fassung drehbaren Hülse, die an der Fassung mittels einer in eine Ringnut der Fassung eingreifenden Rastverbindung gehalten wird, dadurch gekennzeichnet, daß sich die Hülse (18) bei an das Mikroskop angeschraubter Fassung annähernd über die gesamte Länge der Fassung (10) erstreckt und die Hülse (18) eine Bohrung (20) aufweist, durch die hindurch die Rastverbindung (15, 17) mit Hilfe eines Stiftes (22) betätigbar ist.

2. Fassung nach Anspruch 1, dadurch gekennzeichnet, daß als Rastverbindung (15, 17) eine gebogene, radial verformbare Blattfeder (15) mit einem in die Bohrung (20) der Hülse (18) eingreifenden Vorsprung (17) vorgesehen ist.

3. Fassung nach Anspruch 1, dadurch gekennzeichnet, daß die Ringnut (12) nahe dem Anschraubgewinde (11) des Objektivs angeordnet ist.

4. Fassung nach Anspruch 2, dadurch gekennzeichnet, daß die Blattfeder (15) in bezug auf die optische Achse des Objektivs konkav gebogen ist und im Ruhezustand einen Krümmungsradius aufweist, der kleiner als der Krümmungsradius der Ringnut (12) ist.

5. Fassung nach Anspruch 2, dadurch gekennzeichnet, daß die Blattfeder (15) in bezug auf die optische Achse des Objektivs konvex gebogen ist und mit ihrem mittleren Bereich in die Ringnut (12) der Fassung (10) eingreift, und daß in diesem Bereich als Vorsprung eine Gewindehülse (21) befestigt ist.

**Claims**

1. Microscope objective mounting for screwing onto a microscope and having a sleeve which is rotatable around the mounting and retained at the mounting by means of a detent connection engaging into an annular groove of the mounting, characterised thereby, that the sleeve (18), when the mounting is screwed onto the microscope, extends nearly over the entire length of the mounting (10) and the sleeve (18) displays a bore (20), through which the detent connection (15, 17) is actuable with the aid of a pin (22).

2. Mounting according to claim 1, characersed thereby, that a bent, radially deformable leaf spring (15) with a projection (17) engaging into the bore (20) of the sleeve (18) is provided as detent connection (15, 17).

3. Mounting according to claim 1, characterised thereby, that the annular groove (12) is arranged near the screw thread (11) of the objective.

4. Mounting according to claim 2, characterised thereby, that the leaf spring (15) is bent concavely with respect to the optical axis of the objective and in the rest state displays a radius of curvature, which is smaller than the radius of curvature of the annular groove (12).

5. Mounting according to claim 2, characterised thereby, that the leaf spring (15) is bent convexly with respect to the optical axis of the objective and by its central region engages into the annular groove (12) of the mounting (10) and that a threaded sleeve (21) is fastened as projection in this region.

## Revendications

1. Monture d'objectif de microscope pour fixation vissée à un microscope, avec une douille susceptible de tourner autour de la monture et qui est maintenue sur la monture au moyen d'une liaison d'enclenchement de verrouillage à cran d'arrêt pénétrant dans une rainure annulaire de la monture, caractérisé en ce que la douille (18), dans le cas d'une monture vissée sur le microscope, s'étend approximativement sur toute la longueur de la monture (10) et la douille (18) comporte un orifice percé (20) à travers lequel la liaison d'enclenchement de verrouillage à cran d'arrêt (15, 17) peut être actionnée à l'aide d'une tige (22).

2. Monture selon la revendication 1, caractérisée en ce que comme liaison d'enclenchement de verrouillage à cran d'arrêt (15, 17) est prévu un ressort à lame radialement déformable (15) avec une saillie (17) pénétrant dans l'orifice percé (20) de la douille (18).

3. Monture selon la revendication 1, caractérisée en ce que la rainure annulaire (12) est disposée près du filetage de fixation vissée (11) de l'objectif.

4. Monture selon la revendication 2, caractérisée en ce que le ressort à lame (15) est courbé de façon concave par rapport à l'axe optique de l'objectif et présente, à l'état de repos, un rayon de courbure qui est plus petit que le rayon de courbure de la rainure annulaire (12).

5. Monture selon la revendication 2, caractérisée en ce que le ressort à lame (15) est courbé de façon convexe par rapport à l'axe optique de l'objectif et pénètre, par sa partie médiane, dans la rainure annulaire (12) de la monture (10) et en ce que, comme saillie, une douille filetée (21) est fixée dans cette région.

*Fig. 1*

*Fig. 2*